**Europäisches Patentamt**

**European Patent Office**

**Office européen des brevets**

(19)

(11) Publication number: **0 061 909**

**A1**

(12) # EUROPEAN PATENT APPLICATION

(21) Application number: **82301597.9**

(22) Date of filing: **26.03.82**

(51) Int. Cl.³: **F 24 J 3/02**

(30) Priority: **30.03.81 US 248964**

(43) Date of publication of application:
**06.10.82 Bulletin 82/40**

(84) Designated Contracting States:
**DE FR GB IT**

(71) Applicant: **MEGATECH CORPORATION**
**29 Cook Street**
**Billerica Massachusetts 01866(US)**

(72) Inventor: **Basmajian, Vahan V.**
**90 Deacon Haynes Road**
**Concord Massachusetts 01742(US)**

(74) Representative: **Brunner, Michael John et al,**
**Gill Jennings & Every 53 to 64, Chancery Lane**
**London WC2A 1HN(GB)**

(54) Geothermal heat transfer.

(57) A vertical heat exchanger (11, 12) has a vertical inner conduit (12) surrounded by an outer casing (11) formed with ports (17) with a piercing nosecone (12a) at the bottom for facilitating insertion into the earth. The space between the inner conduit (12) and outer casing (11) includes a conductive fill (14) and receives water or salinated fluid through a control valve (15) thus saturating the area surrounding the outer casing (11). Alternatively, the vertical conduit (12) containing the heat exchanging fluid may be arranged parallel to one or more vertical injector pipes formed with ports for injecting water or salinated fluid via a control valve (15) into the region adjacent to the conduit.

*FIG. 1*

- 1 -

MEGATECH CORPORATION.                    GJE 5182/038

<u>GEOTHERMAL HEAT TRANSFER</u>

The present invention relates to geothermal heat transfer and more particularly concerns novel apparatus and techniques for efficiently exchanging heat with the earth to provide both heating and cooling in a cost effective heat pump system.  The invention takes advantage of the geothermal energy always available in the earth substantially independent of weather conditions.

A heat pump typically comprises a compressor that takes refrigerant vapor from a low-pressure, low-temperature evaporator and delivers it at high pressure and temperature  to a condenser as is customary with a vapor-compression refrigeration system.  A heat pump may use the same equipment to cool the conditioned space in summer and to heat it in winter by placing the low-temperature evaporator in the conditioned space during the summer and the high-temperature condenser in the same space during the winter.  Appropriate valves may be used to change the direction of flow of heat-exchanging fluid between operation for cooling and heating.

The equipment must be of the correct size to provide both proper cooling and heating.  In general the heating and cooling loads are different with the heating load in the temperature zone usually being greater than the cooling load. As a result, prior art heat pump systems have typically required a large high horsepower compressor fitted to the heating demand and a supplementary heating system or a heat storage system. If well water or the ground serves as the heat source, the imbalance is less severe than when air is the source. However, typical ground coils are buried only a few feet in the ground and horizontally oriented with poor coupling to the ground resulting in uncertain heat transfer rates with the ground coil. Another disadvantage of laying coils horizontally is the costly installation requiring removal of considerable earth resulting in damage to shrubs, trees and the surrounding area. Furthermore, the physically large air heat exchangers are unsightly and occupy useable living space, and the impurities, quality, quantity and disposal of water and erosion problems have resulted in problems with water and ground air sources. Air is typically the preferred heat source for prior art systems.

According to a first aspect of the invention geothermal heat transfer apparatus comprises an elongate cylindrical heat exchanging means oriented in the earth at an angle with the vertical of less than 45° for exchanging energy with the earth and means for injecting thermally conductive fluid into the region around the heat exchanging means to increase the heat flow between the latter and earth. Preferably the cylindrical heat exchanging means is of uniform outside wall diameter along most of its length and free of protrusions extending radially outward from the outside wall.

According to a second aspect of the invention geothermal heat transfer apparatus comprises elongate heat exchanging means oriented in the earth substantially vertically, thermally conductive fluid in the region around the heat exchanging means for increasing the heat flow between the latter and earth, the heat exchanging means comprising heat exchanging conduit means for carrying heat exchanging fluid, an outer casing surrounding the heat exchanging conduit means, which outer casing is formed with ports through which the thermally conductive fluid may pass.

By means of the invention good thermal coupling to an in-ground heat source that is always available independently of weather is established. The invention increases the effective thermal conductivity of the soil near the metallic heat exchanger by injecting water or other conductive compounds surrounding the heat exchanger. Because of cylindrical symmetry with effective area increasing outward, the region near the heat exchanger is most important.

The construction may be arranged so as to protect internal refrigerant tubes from external mechanical damage while driving or setting the well pipes. Additionally installation costs can be kept relatively low and the apparatus occupies negligible ground area, being a compact system having negligible portions visible. The system may be made completely invisible from the outside.

The heat exchanging means typically comprises a vertical conduit, and the means for increasing thermal conductivity comprise salinated or other thermally conductive material adjacent the conduit, such as brass or copper pellets, or cupro-nickel there preferably being means for injecting water, salinated or other thermally conductive fluid in the region adjacent the conduit. In one embodiment, an outer casing surrounds the conduit and is formed with ports for releasing water, salinated or other thermally conductive fluid to the region outside the outer casing, and the region between the inner and outer casing contains a metallic or other thermally conductive fill. Salinated or other thermally conductive fluid is injected into the region between the conduit and the other casing. Preferably, there is a piercing nosecone at the bottom of the conduit-casing assembly for facilitating insertion into the earth.

Alternatively, one or more injector pipes can be seated in the earth generally parallel to the conduit, and formed with ports facing the conduit, to receive salinated or other thermally conductive fluid and eject the fluid into the region adjacent the conduit.

Examples of apparatus according to the invention will now be described with reference to the accompanying drawing in which:

Figure 1 is a diagrammatical representation, partially in section, of one example of apparatus in which an outer casing surrounds the heat exchanging conduit;

Figure 2 is a diagrammatical representation, partially in section, of a second example with an injector pipe parallel to the heat exchanging conduit; and,

Figure 3 illustrates a third example especially suitable for insertion in wet underground holes.

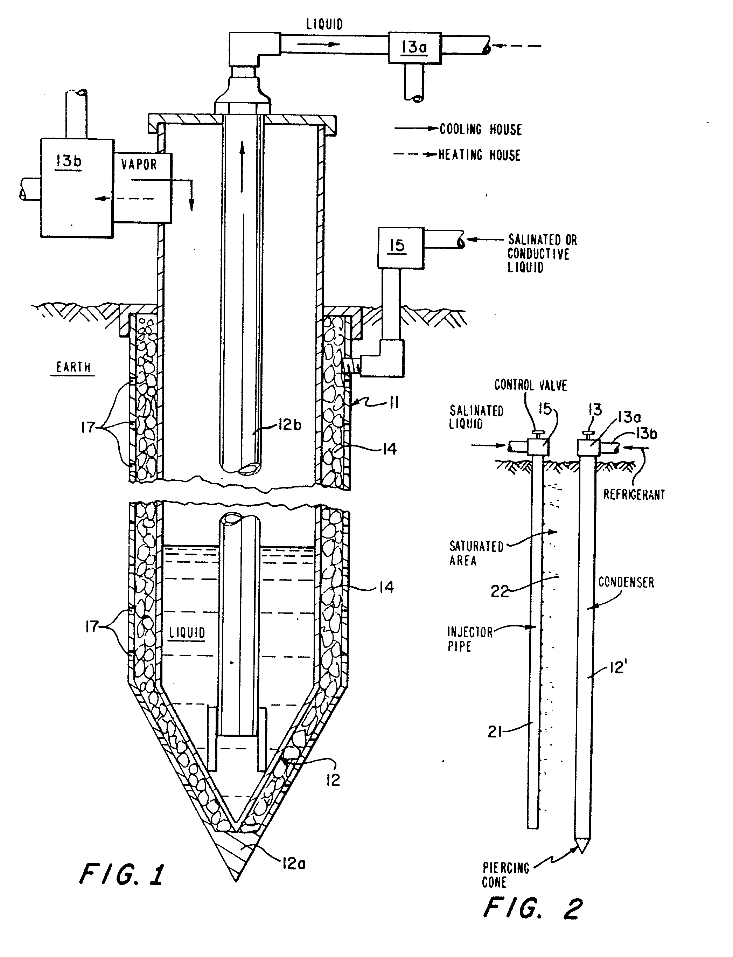

Referring to Figure 1, an outer casing 11 having a piercing nosecone 12a to facilitate insertion is inserted vertically in the earth to a depth of 20 feet (say 6 metres) or more. A heat exchanging conduit 12 is centered within the casing 11 and may function as either a condenser for cooling or as an evaporator for heating. Outer casing 11 and conduit 12 comprises a cylindrical heat exchanging means of a length much greater than its diameter, oriented in the earth at an angle with the vertical of less than 45° for exchanging energy with the earth, and of uniform outside wall diameter along most of its length, free of protrusions extending radially outward from the outside wall. Conduit 12, which may be copper or other suitable thermally conducting material, circulates working fluid that enters and exits through a control valving system having liquid and vapor conduits 13a and 13b, respectively, one being typically coupled to a heat pump compressor and the other to a liquid receiver, depending upon whether the system is then functioning for heating or cooling (broken and solid arrows respectively indicating flow) in a conventional manner that is well-known in the art and not further described here to avoid obscuring the principles of the invention. A central tube 12b carries the liquid which surrounds the bottom of the tube 12b.

The region 14 between conduit 12 and outer casing 11 carries porous metallic fill such as copper or cupro-nickel granules and also receives water/salinated fluid through an injection control valve 15, water fluid being released through ports such as 17 disposed along the outer casing 11 to spray the region around outer casing 11 with fluid to establish good thermal contact between the heat exchanging conduit 12 and the surrounding earth.

Referring to Figure 2, there is shown a diagrammatical representation, partially in section, of an alternative embodiment of the invention in which heat exchange conduit 12' is near one or more parallel injector pipes 21 formed with ports facing conduit 12' to saturate the region 22 between the injector pipe 21 and conduit 12' with salinated or other thermally conductive fluid that increases the thermal conductivity between the earth and the heat exchange conduit 12'.

The invention has a number of advantages. Geothermal energy is constantly available and independent of weather conditions and is virtually free of environmental problems. The source temperature variation is slight. At a depth of twenty feet at $45^o$ latitude, for all seasons the temperature variation is less than $10^oF.(5.6^oC)$. Furthermore, the invention embodies a practical design which may be used at any point inside or outside a building. In fact the invention is especially advantageous when inserted below a cellar because the initial penetration is already below ground level by the depth of the cellar.

The invention increases the thermal conductivity between heat exchanging conduit and the surrounding earth and eliminates the great variance of soil properties. It offers a better heat transfer path with the heat exchanging conduit. Waste water from any source may be injected through control valve 15 and may function to provide additional heat energy for the heat exchange conduit when absorbing heat and may function to receive heat when the system is operating in the cooling mode. The waste water may, for example, be from showers or baths, laundries, dishwashers or other sources.

The heat exchanger according to the invention can withstand ground shocks without damaging the inner conduit. Installation is relatively easy and inexpensive by using conventional well or other drilling equipment to position the outer casing and then instal the inner conduit.

Preferred minimal thermal conductivities for the various elements in BTU/hour/foot$^2$/degree F./foot for outer casing 11 is 20, for fill 14, 70 with 100-200 preferred, 200 for central tube 12b and 0.3 for the injected fluid, (respectively 34.6, 121 (173-346 preferred), 346 and 0.52 W/m.$^{\circ}$C).

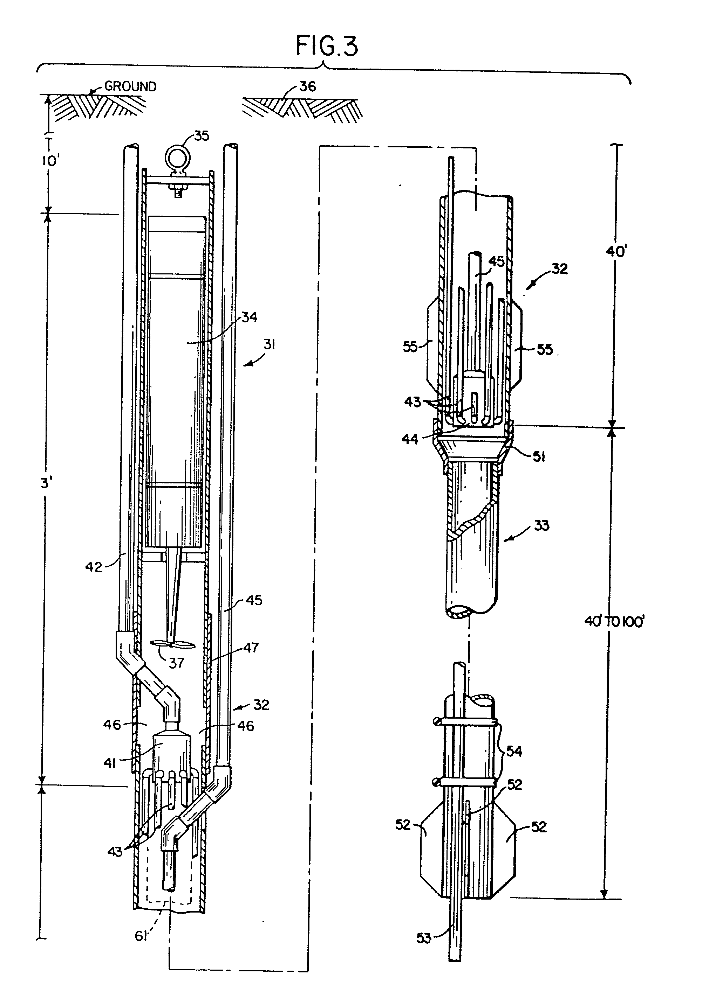

Referring to Figure 3, there is shown a view partially in section with portions cut away and lower portions displaced to the right of the upper portion illustrating another embodiment of the invention especially suitable for insertion in wet underground holes. This embodiment includes an upper section 31, an intermediate section 32 and a lower section 33. Upper section 31 carries pump motor 34 and depends from an eye-bolt 35 secured to a brass plate 38 that may be used for lowering the structure into and raising it from the hole bored in the ground. The top of pump 34 is typically a few feet below the water table. A propeller 37 depends from pump motor 34 and functions to help keep the ground water circulating to provide effective heat transfer. The intermediate section 32 includes an upper distributor 41, that exchanges freon between pipe 42 and eight smaller diameter copper pipes 43 that are typically forty-feet (approx.12 metres) long, a lower distributor 44 exchanging the freon between pipes 43 and a pipe 45 for exchange with the heat exchanging apparatus in the space to be heated and/or cooled. The intermediate section 32 is formed with slots for admitting water into the interior 46 to a level that extends to a height typically just above the propeller blade 37.

Upper section 31 is joined to intermediate section 32 by a support sleeve 47. Intermediate section 32 is joined to lower section 33 by a PVC reducer 51. The end of lower section 33 carries three guide fins 52 spaced 120$^{\circ}$ apart about the

longitudinal axis and a depth limiter rod 53 is strapped to the lower section 33 by straps 54. Three PVC guide fins 55, two of which are visible, are also attached to the lower end of the intermediate section 32. Additional guide fins 52 and 55(not shown)can be spaced as needed along the various sections to provide spacing in the hole.

The specific embodiment shown in Figure 3 is especially suitable for insertion into a six-inch (152mm) diameter hole with upper and intermediate sections 31 and 32 being four-inch (102mm) PVC air duct and lower section 33 being three-inch (76mm) diameter PVC air duct. Pipes 42 and 45 are typically 7/8 in (22mm) copper refrigerator tubing and hard solder is used on all freon system joints in accordance with customary practice.

In an alternative embodiment of the invention for insertion into an eight-inch (203mm) hole, upper section 31 may be substantially the same; however, intermediate section 32 may comprise six-inch (152mm) diameter PVC air duct and the 3/8 in (9.5mm) copper pipes 43 may be soldered to a 40 foot (approx,12 metres) long steel tube axially along its outer diameter, generally indicated by the broken lines 61 in Figure 3. Lower section 33 may then be four-inch (102mm) diameter PVC air duct with reducer 51 being a six-inch (152mm) to four-inch (102mm) PVC reducer.

Since the principal barrier to heat transfer in the earth is the low conductivity of soil, the embodiments of Figure 1 and 2 help increase the exchange of heat with the earth and increasing the effectiveness of the freon heat exchanger without increasing its length. This is a major advantage since excessive length in the freon exchange unit increases piping losses and cost.

- 9 -

In an area where there is ground water, a hole of up to 250 feet (76 metres approx) depth may be drilled and water allowed to fill the hole. Consider a situation where the water level is 20 feet (approx 6 metres) from the surface. A freon heat exchanger having a smaller outside diameter lowered inside the hole as shown in Figure 3 allows vertical convection of water in the hole as a temperature gradient develops. The convection allows circulation of large amounts of water at low velocity so that a relatively small temperature rise is needed. This significantly enhances the efficiency of the heat pump and motor 34 driving propeller 37 further enhances this convection. Since the water is not removed from the ground, the system uses negligible pumping energy. Furthermore, because water carries the heat, the freon pipes need not extend to the bottom of the hole, and the pressure loss associated with lifting the freon back to the surface is relatively small.

Using lightweight low-cost PVC pipe helps keep costs relatively low and prevents regenerative heat exchange between the inner cooled water and outer warmer water. The ducts comprising the intermediate section 32 and lower section 33 support the copper freon tubes 43 and extend to the bottom of the hole for directing the cooled water from which heat has been removed back to the bottom where it can be warmed by the earth as it rises up the outer channel This also prevents stratification or the formation of convection cells both of which would increase. These ducts guide the cooled water downward after heat is extracted.

In a vertical hole of length much greater than diameter the cooler water may not fall automatically to the bottom. Instead, it may stratify, that is, remain stationary because thermal buoyancy is not sufficient to overcome friction in the long pipe without a guide from the inner pipe. This stratification is likely because the density of water at about 39°F (4°C) is at a relative maximum; therefore, there is only a very small change in density with temperature. Alternatively, it may instead establish convection cells. When temperature density differences are large enough to start the water circulating in the hole, the resulting currents do not fill the entire hole, but form cells of length a few times the hole diameter. Water circulates in each of these cells and transfers heat from adjacent cell to adjacent cell. This requires a larger temperature difference than if the water is moved to the bottom with duct end propeller 37.

Temperature drops should be as small as possible because the warmer the freon unit is, the higher the coefficient of performance will be. The heat pump works against this temperature difference and must do more work (draw more electricity) for larger temperature differences. An important advantage of the invention over air-to-air heat pumps is that this temperature difference is less because the temperature in the ground is normally higher than the winter air temperature.

Although motor 34 and propeller 37 induce additional circulation, this apparatus is not mandatory because the difference in density caused by heating or cooling will produce convection currents in the water. Because the areas of duct pipes 32, 33 are large, small differences in density will cause a large mass of water to circulate and transfer heat from the bottom of the hole with minimum loss. Motor and propeller will, however, increase the operating efficiency in the 35°F to 45°F (1.6°C to 7.2°C) range
where density changes are very small.

This embodiment has a number of advantages. It
is superior to heat exchangers that pump water in and
out because the flow rate is much larger and the
pumping energy much less. Thus, very low temperature
differences can be obtained with relatively high ratio
of heat exchanged to energy required to effect the
exchange. It is unnecessary to inject salinated or
other fluid except to add water as the hole dries out.
The entire apparatus may be conveniently removed for
servicing as needed by pulling on eyelet 35. The
lightweight PVC ducts results in relatively little
lifting force being required. The parallel copper,
freon-carrying tubes present a relatively large heat
exchanging area with the water and may be plain tubes
or surface enhanced types that are known, such as those
carrying fins. The use of copper and PVC where
practical helps to insure a relatively long life
because both materials are highly resistant to
corrosion in the earth.

An actual embodiment of the invention having
eight 3/8 in (9.5mm) diameter copper tubes soldered
to the outside of a 5in (127mm) outer diameter round
steel rubing and 4 in (102mm) square steel tubing for
the lower section manifolded to 7/8 in (22mm) O.D.
freon tube 42 and 45 connected to the heat pump and
placed in a vertical six-inch (152mm) diameter bore
hole with the inside filled with fine steel shot
produced a coefficient of performance (C.O.P.) based
on measured data as follows:

- 12 -

DATA

1) Power Input to Compressor - 3 phase Amps = 15
   Volts = 200 a.c.

2) Freon Temperature Tcondensor = 80°F (26.7°C)
   Tcompressor =100°F (37.8°C)

3) Freon Flowrate = 13.53 lbs/min. (0.102 $Kg.s^{-1}$)

   Upon calculating the energy Input and Output
   (detailed procedure not shown)

   $E_{Output}$ = 16.233 Btu/sec. = 17.045 kW

   $E_{Input}$ = 4.156 kW

   Therefore C.O.P. =4.10

- 13 -

## CLAIMS

1.    Geothermal heat transfer apparatus comprising an elongate cylindrical heat exchanging means (11,12) oriented in the earth at an angle with the vertical of less than $45^{o}$ for exchanging energy with the earth and means (15) for injecting thermally conductive fluid into the region around the heat exchanging means (11,12) to increase the heat flow between the latter and earth.

2.    Geothermal heat transfer apparatus according to claim 1, wherein the cylindrical heat exchanging means is of uniform outside wall diameter along most of its length and free of protrusions extending radially outward from the outside wall.

3.    Geothermal heat transfer apparatus in accordance with claim 1 or claim 2, and further comprising thermally conductive fluid in the region around the heat exchanging means (11,12).

4.    Geothermal heat transfer apparatus in accordance with claim 1, claim 2 or claim 3, wherein, the thermally conductive fluid comprises a salinated fluid.

5.    Geothermal heat transfer apparatus in accordance with any of claims 1 to 4, wherein the heat exchanging means (11,12) comprises a heat exchanging conduit (12) for carrying heat exchanging fluid.

6.    Geothermal heat transfer apparatus in accordance

with claim 5, further comprising an outer casing (11) surrounding the heat exchanging conduit (12), which outer (11) casing is formed with ports (17) for releasing thermally conductive fluid to the region around the casing.

7. Geothermal heat transfer apparatus in accordance with claim 6, further comprising a thermally conductive fill (14) between the conduit (12) and the outer casing (11), and means (15) for injecting thermally conductive fluid into the region between the conduit (12) and the outer casing (11).

8. Geothermal heat transfer apparatus in accordance with claim 7, wherein the fill comprises thermally conductive granules (14).

9. Geothermal heat transfer apparatus in accordance with claim 5, further comprising at least one injector pipe (21) adjacent and generally parallel to the conduit (12), and formed with ports for ejecting thermally conductive fluid into the region (22) adjacent to the conduit (12).

10. Geothermal heat transfer apparatus in accordance with any of claims 5 to 9, wherein the heat exchanging conduit (12) includes a central tube (12b) of thermally conducting material for carrying heat exchanging fluid in liquid form, and heat exchanging fluid in the conduit.

11. Geothermal heat transfer apparatus in accordance with claim 10, wherein the heat exchanging fluid is in liquid form at the bottom of the conduit (12) and vapor form at the top, and further comprising control valve means (13a,13b) for passing the heat exchanging fluid to and from external apparatus.

12. Geothermal heat transfer apparatus in accordance with claim 11, wherein the control valve means comprises a vapor port near the top of the heat

- 15 -

exchanging conduit (12) for passing heat exchange fluid in vapor form, and a liquid port at the top of the central tube (126) for passing heat exchanging fluid in liquid form.

13. Geothermal heat transfer apparatus in accordance with any of claims 1 to 12, wherein the lowermost portion of the cylindrical heat exchanging means (11,12) comprises a piercing nose cone (12a) for facilitating insertion into the earth.

14. Geothermal heat transfer apparatus comprising, elongate heat exchanging means (41,43,44) oriented in the earth substantially vertically, thermally conductive fluid in the region (46) around the heat exchanging means (41,43,44) for increasing the heat flow between the latter and earth, the heat exchanging means (41,43,44) comprising heat exchanging conduit means (43) for carrying heat exchanging fluid, an outer casing (32) surrounding the heat exchanging conduit means (43) which outer casing is formed with ports through which the thermally conductive fluid may pass.

15. Geothermal heat transfer apparatus in accordance with claim 14, wherein the heat exchanging conduit means (43) comprises a plurality of tubes (43) made of conducting metal having a length many times greater than the largest cross sectional dimension of each and that of the cross sectional area embracing the tubes.

16. Geothermal heat transfer apparatus in accordance with claim 15, and further comprising, manifold means (41,44) to which the parallel metal conducting tubes (43) are connected for transferring heat exchange between the tubes (43) and first and second heat exchanging fluid tubes (42,45) for carrying the heat exchanging fluid between the parallel tubes (43) and space to be heated and/or cooled.

17.    Geothermal heat transfer apparatus in accordance with claim 16, wherein the heat exchanging fluid tubes (42,45) extend outside and parallel to the outer casing (31) above the manifold means (41,44).

18.    Geothermal heat transfer apparatus in accordance with any of claims 14 to 17, further comprising propeller means (37) inside the outer casing (31,32) above  the manifold means (41) for moving the heat exchanging fluid along the axis of the outer casing (31,32) and motor means (34) for rotating the propeller means (37).

LIQUID

13a

→ COOLING HOUSE
--→ HEATING HOUSE

13b VAPOR

15 ← SALINATED OR CONDUCTIVE LIQUID

EARTH

17

12b

11

14

14

17

LIQUID

12

12a

**FIG. 1**

CONTROL VALVE

SALINATED LIQUID

15

13 13a
13b

REFRIGERANT

SATURATED AREA

22

CONDENSER

INJECTOR PIPE

12'

21

PIERCING CONE

**FIG. 2**

FIG.3

European Patent
Office

EUROPEAN SEARCH REPORT

0061909

Application number

EP 82 30 1597.9

## DOCUMENTS CONSIDERED TO BE RELEVANT

| Category | Citation of document with indication, where appropriate, of relevant passages | Relevant to claim |
|---|---|---|
| Y,A | DE - A1 - 2 734 583 (S.W. YUAN)<br>* page 7, paragraph 5 to page 8, paragraph 1; fig. 1, no. 28, 30 *<br>& US - A - 4 138 995 | 1,3,9 |
| Y,A | US - A - 4 094 356 (W.F. ASH et al.)<br>* column 2, lines 52 to 56; column 3, lines 41 to 62; fig., no. 13 * | 1,2,5, 7,8,11 |
| A | DE - B - 2 113 341 (I. ALADEW et al.)<br>* fig. 1, no. 3, 8; column 3, lines 36 to 47; column 5, lines 58 to 62; fig. 2; column 8, lines 34 to 44 *<br>& GB - A - 1 326 458 | 1,3,4, 6,10 |
| A | DE - A1 - 2 928 414 (A. HAMPE)<br>* claim 5 * | 13 |
| A | DE - A1 - 2 715 499 (SPERRY RAND CORP.)<br>* page 15, paragraph 1; fig. 1, no. 18; page 36, paragraph 3; fig. 12 *<br>& US - A - 4 142 108 | 4,9, 14-16, 18 |
| A | MACHINE DESIGN, Vol. 52, No. 19, 1980 Cleveland, Ohio USA<br>"Heat Exchanger Makes Geothermal Power More Attractive"<br>* complete document * | |
| P,A | US - A - 4 277 946 (BOITUM) | |

**CLASSIFICATION OF THE APPLICATION (Int. Cl. 3)**

F 24 J    3/02

**TECHNICAL FIELDS SEARCHED (Int.Cl. 3)**

F 24 J    3/00

The present search report has been drawn up for all claims

| Place of search | Date of completion of the search | Examiner |
|---|---|---|
| Berlin | 19-05-1982 | PIEPER |

EPO Form 1503 1   06.78